# EUROPEAN PATENT APPLICATION

(11) **EP 1 364 764 A2**
(43) Date of publication of application: **26.11.2003**
(21) Application number: 02023131.2
(22) Date of filing: 15.10.2002
(51) Int. Cl.: B29C 41/06, B29C 41/46, B29C 41/36, B29C 41/42

(54) **Rotational pressing machine with heating means**

(30) Priority: 23.05.2002 IT MI20021111
(71) Applicant: Persico S.p.A., 24027 Nembro (BG) (IT)
(72) Inventor: Persico, Claudia, 24022 Alzano Lombardo (BG) (IT)
(74) Representative: Faraggiana, Vittorio, Dr. Ing.

(57) **Abstract**

Rotational pressing machine comprising a die (14), die heating means (23,24,30) and a powered die rotation structure (11). The heating means (24) are advantageously realized with air circulation in appropriate channels in the die and are arranged on the powered rotation structure (11) of the die to rotate therewith.
the air circulation means comprise baffles (26,27) controlled to divert the air flow.
The machine can also comprise automatic means for pouring powder into the die and for taking the pressed part.

## Description

The present invention relates to an innovative rotational pressing machine.

Pressing processes performed with dies placed and kept in rotation until the pressing material is solidified are known. In many of these processes solidification is achieved by appropriate heating. For this purpose the entire die rotation machine is usually placed in a purposeful heating furnace. This involves various disadvantages among which is the necessity that the rotation machine be made with costly contrivances which allow operation in the prohibitive environment created in the furnace during heating. In addition, automatic die opening, loading and unloading are made impossible and all die handling is made long and complicated because of the die temperature.

To seek to at least partially remedy the disadvantages of the above mentioned plants with heating furnaces solutions have been proposed in the prior art in which the die is equipped with ducts for diathermic oil circulation fed by a heating system located near the rotation machine. But this requires providing complicated rotating joints to allow feeding of the ducts in the die during the typical rotation of the die around the two orthogonal axes. The existence of the joints also makes difficult automatic handling of the dies because the joints do not ensure perfect sealing.

It is also difficult to control the temperature especially as concerns the uniformity of distribution of the heat which is essential for pressing with uniform thicknesses.

The general purpose of the present invention is to remedy the above mentioned shortcomings by making available a rotational pressing machine which would be simple and relatively economical, allow easy moving and handling of the dies, avoid the use of heating furnaces and cooling chambers, and produce very satisfactory results for those features of the pressed product which depend on temperature.

In view of this purpose it was sought to provide in accordance with the present invention a rotational pressing machine comprising a die, die heating means and a powered die rotation structure characterized in that the heating means are arranged on the powered rotation structure of the die to rotate therewith.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a diagrammatic cross sectioned front elevation view of a machine in accordance with the present invention,
FIG 2 is a view along plane of cut II-II of FIG 1, and
FIGS 3-5 are diagrammatic views of operational steps of the machine.

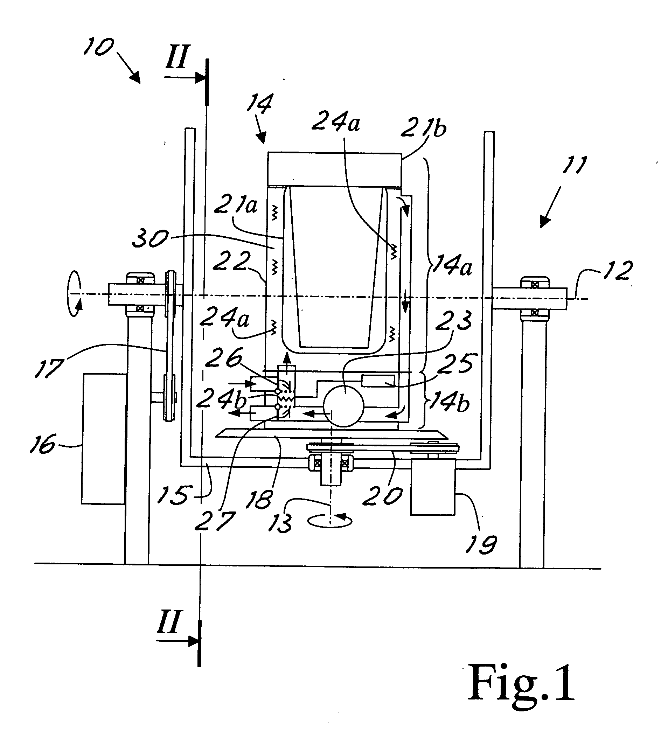

With reference to the figures, FIG 1 shows diagrammatically a rotational pressing machine designated as a whole by reference number 10 and realized in accordance with the present invention and which comprises a structure 11 for powered rotation of a die assembly 14 in accordance with two orthogonal axes 12, 13. The structure 11 comprises a frame 15 which rotates around the axis 12 by means of a motor 16 and a transmission 17 and a platform 18 supported by the frame 15 to rotate around the axis 13 by means of a motor 19 and a transmission 20.

By appropriate operation of the motors 16 and 19 rotation of the die assembly for distribution of the material to be pressed in it is accomplished as is known to those skilled in the art.

The actual die 21 designated as a whole by reference number 21a for the lower part and 21b for the upper part is inserted at least partly in an outer sleeve or covering 22 having channels 30 for air circulation which is forced by a blower 23 supported on the platform 18 so as to form part of the die assembly and rotate with the die.

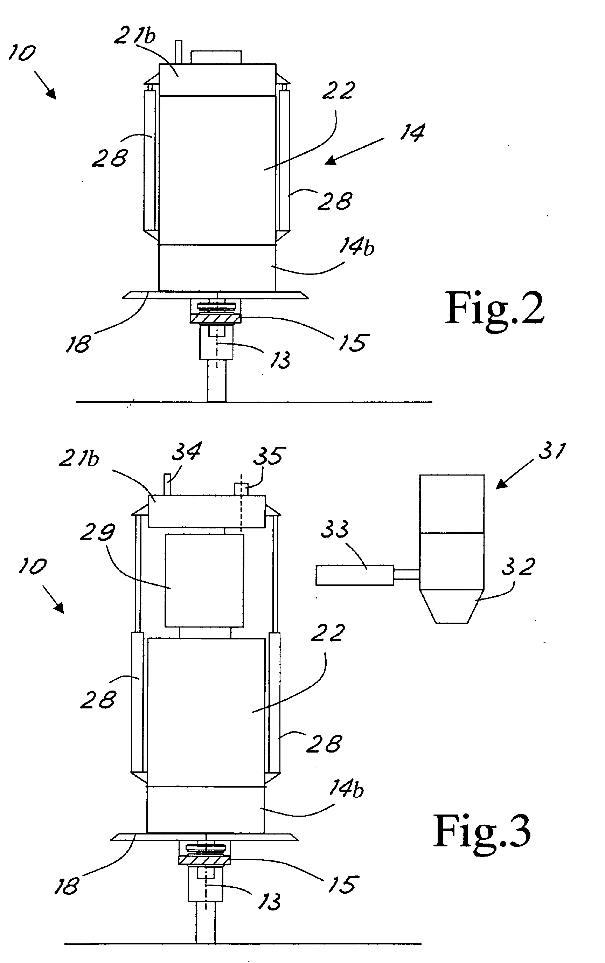

As may be seen in FIG 2 the machine can advantageously comprise actuators 28 (for example compressed air cylinders) which act on the cover of the die for automatic die opening and closing.

There are also one of more elements 24 for heating the circulating air. These members can be distributed around the die as shown in 24a or concentrated along connecting ducts as shown in 24b.

The heating elements 24 can advantageously be electrical resistances or heat exchangers run through by suitable fluid heated by an appropriate heating device 25 on board the machine. The exchange fluid can be for example diathermic oil and the fluid heating system can be an appropriate known system. The heating elements can even be electricity or gas powered infrared lamps, hot rods, etc.

Thanks to the flow baffles 26, 27 air circulation can be controlled between a closed circuit circulation (with the baffles in the position shown in solid lines in the figure) for the heating step when the air transfers heat from the heating elements to the die and open circuit circulation (with the baffles in the position shown in broken lines in the figure) for the cooling step. In the cooling step the blower sucks air from the channels around the die and sends it to the environment so as to remove heat from the die.

Completing the heating elements in the air circulation unit as shown at 24b it is possible to obtain the additional advantage (as is made clear by the figure) that the resistances are not cooled during the die cooling cycle. This brings an energy saving and the resistances can be the armored type since it is no longer necessary that they respond very quickly.

In addition, as is again made clear by the figure, the channeled part of the die (14a) can be easily separated from the underlying blower and heating unit (14b). The dies are thus less costly since the same circulation and heating unit can be used for several dies. Naturally this can also be done with less saving by placing the heating elements in the positions 24a and reusing only the circulation unit for several dies. The choice will of course depend on specific requirements and preferences.

The circulation unit or the circulation and heating unit can be a welded sheet metal box to which is applied the blower and, in this case, the heating elements. If desired, the blower flange can be the supporting member of the unit. In the box are also located the two baffles which allow the changeover from closed circuit for heating to open circuit for cooling with the possible advantage of exclusion of the resistances.

It is now clear that the predetermined purposes have been achieved by making available a machine allowing rotational pressing with suitable die heating and cooling without the disadvantages of the prior art.

The exterior of the die remains virtually cold (and the rest is brought rapidly to a reasonably low temperature) so that automatic movement and handling techniques such as loading, closing, opening and unloading the die can be used easily and rapidly. The processing times of a machine in accordance with the present invention are much shorter than the processing times of conventional plants.

The die assembly plus the blower and heating assembly are mounted on a rotating structure which can be much simplified as compared with that necessary in the prior art because there are no longer requirements of endurance in the prohibitive environment typical of conventional rotational pressing. On the whole the entire machine is less costly, less complicated and less delicate than the conventional rotational pressing stations.

In addition, the forced air circulation process allows accurate control of die temperature in the various pressing steps and allows a very uniform die temperature. This makes possible pressings with thicknesses correspondingly very uniform as each temperature irregularity of the die results in an irregularity in the thickness of the pressed part or if necessary differentiated thicknesses. In addition this allows easy adjustment of die temperature to achieve the optimal compromise between speed of solidification and tensioning of the pressed part.

As an innovation, the machine in accordance with the present invention can also comprise a pressing automation system (designated as a whole by 31) as shown diagrammatically in FIG 3 where the die is shown open. the pressed part 29 is designed to remain attached to the cover and to be raised therewith.

The system 31 comprises a batching plant 32 (advantageously the volumetric type) for pouring the powder into the die and tongs 33 for grasping the pressed part with both powered to be movable between rest and working positions as clarified below.

At the end of the cycle the die is stopped in an appropriate position (set for example by the operator) and opens automatically while the actuators 28 open the cover with a travel sufficient to eject the pressed part (FIG 3). An automatic ejection device 34 injects compressed air between the cover and the pressing. To avoid the risk of die pressurization in this step the ejector is operated by a compressed air consent which is in turn controlled by opening cylinders with a stop.

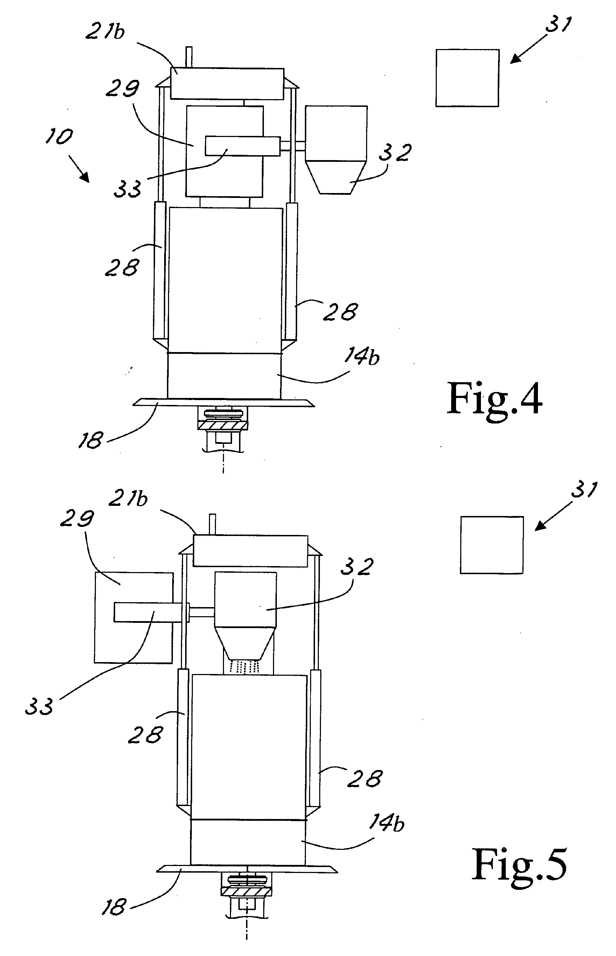

Then the tongs 33 (FIG 4) are operated so that they grasp the pressing and accompany it out of the cover by working with the knockout. Pursuing their travel the tongs 33 take the part out of the machine (FIG 5).

As may be seen again in FIG 5 the batching plant is taken onto the die for pouring of the powder and the cycle can resume from the beginning with a new pressing. As shown in the figures, the batching plant can advantageously work in tandem with the ejection tongs and thus enter between the cover and the lower body while the tongs exit from the opposite side.

The cover comprises an automatic vent device 35 advantageously made with a passing hole communicating with the exterior and opened and closed hermetically by an appropriate actuator.

Naturally the above description of an embodiment applying the innovative principles of the present invention is given by way of non-limiting example of said principles within the scope of the exclusive right claimed here. For example it will be clear to those skilled in the art how several dies or assemblies for the same die can be mounted on the same machine.

Of course the die and the machine will comprise all those accessories not shown here because known and readily imaginable to those skilled in the art but normal for rotational dies such as material feeding ducts, opening systems etc. Lastly, it is obvious that the form of the die and of the product obtained shown in the figures are only diagrammatical to describe the principles of the present invention and in reality can have any known form.

## Claims

1. Rotational pressing machine comprising a die (14), die heating means (23,24,30) and a powered die rotation structure (11) **characterized in that** the heating means (24) are arranged on the powered rotation structure (11) of the die to rotate therewith.

2. Machine in accordance with claim 1 **characterized in that** the heating means comprise means (23) for air circulation in channels (30) around the body of the die and heating elements (24) for said air.

3. Machine in accordance with claim 1 **characterized in that** the heating elements (24) are arranged in the channels (30) around the die body.

4. Machine in accordance with claim 2 **characterized in that** the air circulation means comprise baffles (26,27) controlled to divert the air flow from closed circuit for heating the die to open circuit for cooling it.

5. Machine in accordance with claim 4 **characterized in that** when the baffles (26,27) are in the open circuit position they also exclude the heating elements (24b) from the air flow passing in the channels around the die.

6. Machine in accordance with claim 4 **characterized in that** the circulation means, the baffles and at least part of the heating means are arranged in a base body (14b) arranged between the die (14a) and the powered structured (11).

7. Machine in accordance with claim 1 **characterized in that** the powered structure comprises a frame (15) rotatable around a first powered axis (12) and a platform (18) on which is mounted the die (14) and which is supported on said frame (15) to rotate around a second powered axis (13) arranged orthogonally to the first.

8. Machine in accordance with claim 2 **characterized in that** the heating elements (24) comprise electrical resistances.

9. Machine in accordance with claim 2 **characterized in that** the heating elements comprise heat exchangers (24) arranged in the air flow and traversed by a fluid heated by a heater (25).

10. Machine in accordance with claim 1 **characterized in that** the die comprises actuators (28) for its powered opening.

11. Machine in accordance with claim 10 **characterized in that** it comprises automatic means (33) of taking the pressed part and automatic means (32) of pouring powder into the die.

12. Machine in accordance with claim 11 **characterized in that** the automatic means (33) of taking the pressed part comprise powered tongs for grasping and handling the pressed part raised from the upper part of the die during its powered opening.

13. Machine in accordance with claim 11 **characterized in that** the automatic means of pouring powder into the die comprise a hopper (32) movable between a rest position and a working position above the open die.

14. Machine in accordance with claim 12 and 13 **characterized in that** the taking means and the metering means move in tandem for one to enter into its working position while the other exits from the opposite side.
